(19) Europäisches Patentamt
European Patent Office
Office européen des brevets

(11) **EP 2 823 331 B1**

(12) **EUROPÄISCHE PATENTSCHRIFT**

(45) Veröffentlichungstag und Bekanntmachung des Hinweises auf die Patenterteilung:
**18.11.2015 Patentblatt 2015/47**

(51) Int Cl.:
*G01S 15/87* (2006.01)     *G01S 15/04* (2006.01)
*G01S 15/93* (2006.01)     *G01S 7/539* (2006.01)

(21) Anmeldenummer: **12810185.4**

(22) Anmeldetag: **14.12.2012**

(86) Internationale Anmeldenummer:
**PCT/EP2012/075540**

(87) Internationale Veröffentlichungsnummer:
**WO 2013/131592 (12.09.2013 Gazette 2013/37)**

(54) **VERFAHREN UND VORRICHTUNG ZUM ERFASSEN VON OBJEKTEN IN EINER UMGEBUNG EINES FAHRZEUGS**

METHOD AND DEVICE FOR DETECTING OBJECTS IN THE SURROUNDINGS OF A VEHICLE

PROCÉDÉ ET DISPOSITIF POUR APPRÉHENDER DES OBJETS DANS L'ENVIRONNEMENT D'UN VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **03.03.2012 DE 102012004396**

(43) Veröffentlichungstag der Anmeldung:
**14.01.2015 Patentblatt 2015/03**

(73) Patentinhaber: **Volkswagen Aktiengesellschaft 38440 Wolfsburg (DE)**

(72) Erfinder:
• **MAX, Stephan**
  **38518 Gifhorn (DE)**
• **PRAUßE, Claudia**
  **38120 Braunschweig (DE)**
• **URBAN, Alexander**
  **38518 Gifhorn (DE)**

(56) Entgegenhaltungen:
**EP-A1- 1 557 694     DE-A1-102006 008 636**

**Beschreibung**

Für moderne Unterstützungsfunktionen und Systeme in Kraftfahrzeugen, beispielsweise automatische Einparksysteme, ist eine Kenntnis der Umgebung des Fahrzeugs notwendig. Automatische Einparksysteme sind in der Lage, einen Fahrer beim Einparken des Fahrzeugs zu unterstützen oder den Einparkvorgang vollständig ohne einen Eingriff des Fahrers auszuführen. Um einen solchen vollautomatisierten Vorgang ausführen zu können, ist es notwendig, dass das Fahrzeug mittels berührungsloser Sensorik Messergebnisse über Objekte in der Umgebung erfasst und so Gebiete sicher identifizieren kann, welche von Objekten belegt sind und für einen Einparkvorgang nicht zur Verfügung stehen und welche Gebiete oder Flächen frei von Objekten sind und zum Ausführen des Einparkvorgangs genutzt werden können. Üblich ist es, Gebiete oder Punkte in der Umgebung des Fahrzeugs, an denen anhand der Messergebnisse ein Vorhandensein eines Objekts erkannt ist, in einer Umgebungskarte als belegt zu markieren. Die Belegungsinformation kann beispielsweise in Form einer Wahrscheinlichkeit angegeben werden, dass das zu dem Kartengebiet korrespondierende Gebiet der Umgebung mit einem Objekt belegt ist.

Berührungslose Messverfahren arbeiten häufig nach dem so genannten Impulsechomessverfahren, bei dem entweder ein Schallimpuls oder ein Impuls elektromagnetischer Strahlung ausgesandt wird, der dann an der Oberfläche der in der Umgebung befindlichen Objekte reflektiert wird. Von der Messsensorik werden diese , reflektierten Echoimpulse zeitaufgelöst erfasst. Wird elektromagnetische Strahlung verwendet, so spricht man abhängig vom Frequenzbereich der elektromagnetischen Strahlung entweder von einer Radarmessung (Radar: radio detection and ranging) oder Lidarmessung (Lidar: light detection and ranging). Bei Radar- und Lidarmessungen ist es möglich, die elektromagnetische Strahlung in einen eng begrenzten Winkelbereich gerichtet auszusenden. Anhand der Laufzeit der elektromagnetischen Strahlung, d.h. der Zeit zwischen dem Aussenden des Impulses und dem Zeitpunkt des Empfangs des Echoimpulses lässt sich bei Kenntnis der Ausbreitungsgeschwindigkeit des ausgesandten Impulses bzw. des Echoimpulses in der Umgebung auf die Entfernung zu dem Objekt schließen, an dem eine Reflexion des ausgesandten Impulses stattgefunden hat. Bei Radar- oder Lidarmessungen wird für aufeinanderfolgende Messungen in der Regel die Abstrahlrichtung geändert und so die Umgebung nacheinander anhand der in unterschiedliche Raumwinkelbereiche abgestrahlten und aus diesen Raumwinkelbereichen empfangenen Echoimpulse abgetastet.

Beim Einsatz von Schallsensoren, welche Schallsignale im Ultraschallfrequenzbereich abstrahlen, wird in der Regel Schall in einen größeren Winkelbereich abgestrahlt und auch aus einem größeren Winkelbereich von den Sensoren empfangen. Daher kann aufgrund einer Messung anhand der Zeitspanne zwischen dem Aussenden des Impulses und dem Eintreffen des ersten Echoimpulses lediglich die Aussage getroffen werden, dass auf einem Abschnitt einer Ellipse ein Objekt vorhanden ist, wobei die Ellipse dadurch gekennzeichnet ist, dass der Sender und der Empfänger in den Brennpunkten der Ellipse angeordnet sind. Die Größe der Ellipse ist durch die Laufzeit des Echoimpulses festgelegt. Wird ein Sensor eingesetzt, der sowohl als Sender und auch als Empfänger dient, so geht die elliptische Kurve in einen Kreisbogen über. Um die Position des Objekts genauer feststellen zu können, ist die Auswertung mehrerer Messungen für unterschiedliche Detektionsgeometrien notwendig. Eine Detektionsgeometrie, welche auch als Messungsgeometrie oder Sender-Empfänger-Geometrie bezeichnet wird, ist durch die Lage des Senders und die Lage des Empfängers sowie gegebenenfalls eine Abstrahlgeometrie bzw. Empfangsgeometrie, sofern diese änderbar sind, relativ zu einem mit der Umgebung ortsfest gekoppelten Koordinatensystem festgelegt. Unterschiedliche Messgeometrien erhält man somit beispielsweise, indem man das Sendesignal eines Sensors mit an verschiedenen Orten angeordneten Empfangssensoren vermisst oder indem man den sendenden Sensor und/oder den empfangenden Sensor an einer anderen Stelle bezüglich des ortsfesten Koordinatensystems positioniert.

Die Überlagerung von mehreren unterschiedlichen Messergebnissen im Bildraum, d.h. die Überlagerung der elliptischen oder kreissektorförmigen Kurven, auf denen zumindest an einem Punkt ein lokalisiertes Objekt gemäß der jeweiligen Messungen befindlich ist, zur exakten Positionsbestimmung wird als Lateration bezeichnet. Um einen Punktstreuer, d.h. ein räumlich nicht ausgedehntes Objekt, in der Umgebung eindeutig lokalisieren zu können, ist die Überlagerung von drei Messergebnissen notwendig. Daher wird die Positionsermittlung auch als Trilateration bezeichnet. Da Objekte in realen Umgebungen von Fahrzeugen in der Regel ausgedehnte Objekte sind, ist eine korrekte Erfassung der Umgebung aufwendig und schwierig und ließe sich deutlich verbessern, sofern es möglich wäre, anhand weniger Messergebnisse festzustellen, welche Geometrie ein Objekt in der Umgebung aufweist oder welcher Objektklasse, die über die geometrische Form festgelegt ist, es zuzuordnen ist.

Aus der EP 1 557 694 A1 ist ein Verfahren zur Klassifizierung von Objekten bekannt. Bei dem dort beschriebenen Verfahren zur Klassifizierung von Objekten, die Gegenständen im Erfassungsbereich eines Sensors für elektromagnetische Strahlung, insbesondere eines Laserscanners, entsprechen, auf Basis wenigstens eines von dem Sensor erfassten Abstandsbildes des Erfassungsbereiches mit Abstandsbildpunkten, die jeweils durch Aussendung eines Pulses elektromagnetischer Strahlung und Detektion des von einem Punkt oder Bereich auf einem Gegenstand jeweils als Echopuls zurückgeworfenen Pulses sowie Erfassung wenigstens einer von der Energie des Echopulses abhängigen Echopulseigenschaft des Echopulses erhalten wurden und denen jeweils wenigstens ein Wert für einen Parameter für die Echopulseigenschaft zugeordnet ist, werden wenigstens einem Objekt Abstandsbildpunkte des Abstandsbildes zugeordnet und es wird dem Objekt in Abhängigkeit von wenigstens einem der Parameterwerte für die Echopulseigenschaft, die den dem Objekt zugeordneten Abstandsbildpunkten zugeordnet sind, eine Objektklasse zugeordnet. Hierdurch sollen beispielsweise Fußgänger, Pkws, Lkws und Ähnliches voneinander unterschieden werden.

Aus der WO 2010/121582 A1 ist ein Verfahren zur Klassifizierung von Objekten in Hindernisse und Nichthindernisse für Fahrzeuge angegeben. Das Fahrzeug umfasst einen Umgebungssensor, der stationäre und bewegte Objekte in einer Szene vor einem Fahrzeug erfasst und gegebenenfalls einen Bewegungsverlauf der Objekte verfolgt. Das Verfahren sieht einen oder mehrere Beobachter vor, wobei ein Beobachter ein Objekt nach vorgegebenen Merkmalen klassifiziert und bei mehreren Beobachtern zu einem Gesamtklassifikationsergebnis beiträgt. Ein Beobachter erfasst den Bewegungsverlauf von Fahrzeugen in einer Umgebung von zumindest einem stationären Objekt und klassifiziert in Abhängigkeit davon das stationäre Objekt. Hierdurch sollen beispielsweise Fahrzeuge auf der Fahrbahn von unterfahrbaren Schilderbrücken u. ä. unterschieden werden.

Aus der US 2010/0097200 A1 sind ein Verfahren und eine Vorrichtung zum Identifizieren und Klassifizieren von Objekten bekannt. Hierbei wird elektromagnetische Strahlung von einem Sensor ausgesandt und die an einem Objekt reflektierten Anteile von dem Sensor empfangen. Die empfangenen Signale werden durch einen Vergleich mit gespeicherten charakteristischen Werten analysiert und eine Klassifizierung der Objekte auf Basis der Analyse vorgenommen. Hierfür ist ein Analysator mit einem Speicher ausgerüstet, in dem charakteristische Muster gespeichert sind, die mit den empfangenen Signalen verglichen werden, um anhand dieses Vergleiches die reflektierenden Objekte zu klassifizieren. Hierdurch sollen beispielsweise Personenfahrzeuge, Lastkraftwagen, Verkehrsschilder oder herumliegende Dosen hinsichtlich ihres Typs klassifiziert werden.

Aus der DE 10 2008 041 679 A1 sind eine Vorrichtung und ein Verfahren zur erinnerungsbasierten Umfelderkennung bekannt. Beschrieben ist die Umfelderkennung für ein sich bewegendes System, wobei wenigstens ein an das sich bewegende System gebundener Sensor zum Einsatz kommt, bei dem mittels eines bildgebenden Verfahrens wenigstens ein Objekt oder Merkmal im Umfeld des Systems zu einem ersten Zeitpunkt erkannt wird, wobei Daten des wenigstens einen dieser Objekte oder Merkmale in einem Speicher abgelegt werden, wobei nach einer wenigstens möglichen Sichtung dieses wenigstens einen Objekts oder Merkmals zu einem mindestens zweiten Zeitpunkt eine Klassifikation dieses wenigstens einen Objekts oder Merkmals stattfindet, mit Hilfe eines Vergleichs der im Speicher abgelegten Daten. Hierdurch sollen Objekte in Umgebungen klassifiziert werden, die beispielsweise häufig durchfahren werden.

Aus der DE 103 35 601 A1 ist ein Verfahren zur Objektklassifizierung unter Verwendung einer 3D-Modelldatenbank bekannt. Beschrieben ist ein Verfahren zur computergestützten Klassifizierung von dreidimensionalen Objekten zu einer oder mehreren vorgegebenen Objektklassen, bei dem ein Objekt messtechnisch erfasst wird. Um das Verfahren effizienter und sicherer zu gestalten, basiert das beschriebene Verfahren darauf, dass die Messdaten 3D-Daten sind, dass eine sensierte Messdatenpunktwolke aus 3D-Daten mit gespeicherten 3D-Modelldaten (den Archetypen der jeweiligen Objektklasse) verglichen und durch Variation der 3D-Lage des Modells im Raum auf die Messpunktwolke abgestimmt wird und dann die Klassifizierung zu der am besten passenden Klasse erfolgt. Hierdurch sollen beispielsweise Fußgänger, Radfahrer, Personenkraftwagen und Lastkraftwagen hinsichtlich ihres Hindernis- oder Objekttyps klassifiziert werden.

Der Erfindung liegt somit die technische Aufgabe zugrunde, ein Verfahren und eine Vorrichtung zu schaffen, mit denen eine Klassifizierung im Hinblick auf geometrische Formen von Objekten möglich ist.

Die technische Aufgabe wird erfindungsgemäß durch ein Verfahren mit den Merkmalen des Patentanspruchs 1 sowie eine Vorrichtung mit den Merkmalen des Patentanspruchs 10 gelöst. Vorteilhafte Ausgestaltungen der Erfindung ergeben sich aus den Unteransprüchen.

Der Erfindung liegt der Gedanke zugrunde, dass es für viele geometrische Objekte möglich ist, diese anhand weniger Parameter zu klassifizieren. Beispielsweise lassen sich Geraden bezüglich eines Referenzpunktes gemäß der so genannten Hesse-Normalform durch einen Abstand d ihres Lotfußpunktes einer Lotgeraden, die durch den Referenzpunkt verläuft, zum Referenzpunkt und einen Winkel der Lotgeraden bezüglich einer Achse, beispielsweise einer Abszisse eines Koordinatensystems, beschreiben. Betrachtet man den Abstand und den Winkel jeweils als Parameter, so lassen sich die Geraden in der Umgebung des Referenzpunktes jeweils durch diese zwei Parameter Lotfußpunktabstand und Schnittwinkel mit einer Koordinatenachse identifizieren. Aus praktischen Gründen ist es vorteilhaft, nur ein Raster von Geraden zu betrachten, d.h. den Raum bzw. die Parameter zu diskretisieren. Vorzugsweise wird eine Diskretisierung gewählt, die sich in dem Parameterraum einfach umsetzen lässt. Beispielsweise werden die Geraden betrachtet, deren Abstand in einem bestimmten Intervall liegt, wobei nur bestimmte Abstände in diesem Intervall betrachtet werden, die das Intervall in gleichmäßige Abschnitte unterteilen. Ebenso wird der Winkelbereich beispielsweise mit einer Winkelauflösung einer bestimmten Gradzahl, beispielsweise ein Grad, aufgelöst bzw. diskretisiert.

Objekte der gleichen geometrischen Gestalt stellen bei dieser Betrachtung eine Klasse von Objekten dar, die sich in einem Parameterraum darstellen lassen. Kreisförmige Objekte in der Umgebung lassen sich beispielsweise über drei Parameter eindeutig identifiziere: einen Abstand des Mittelpunktes von einem Referenzpunkt, einen Winkel einer Verbindungslinie von dem Referenzpunkt zum Mittelpunkt des Kreises bezüglich einer festgelegten Koordinatenachse, beispielsweise einer Abszisse, und den Radius des Kreises. Auf diese Weise lässt sich eine Vielzahl weiterer Objekte eindeutig parametrisieren.

Betrachtet man zunächst exemplarisch ein Objekt, beispielsweise eine Gerade als Parametrisierung einer unendlich ausgedehnten ebenen Wand im zweidimensionalen Raum, so lässt sich für eine vorgegebene Abbildungsgeometrie, welche durch die Lage von Sender und Empfänger sowie gegebenenfalls deren Abstrahl- und Empfangscharakteristik festgelegt ist, voraussagen, an welchem Punkt dieses betrachteten Objekts eine Reflexion auftreten wird. Gekoppelt hiermit ist eine Laufzeit, an der in dem Echosignal einer Impulsechomessung ein Echoimpuls auftreten würde. Ein Maß der Evidenz dafür, dass diese betrachtete Gerade in der Umgebung vorhanden ist, wird somit durch den Echosignalwert geliefert, der mit dieser erwarteten Laufzeit korrespondiert. Somit ist für die Reflexionsgeometrie und diese betrachtete Gerade in dem Echosignal nur der Echosignalwert zu diesem einen erwarteten Zeitpunkt von Relevanz. Diese Betrachtung lässt sich nun für alle Parametersätze, also alle Parameterwert-Tupel, die ein Objekt dieser Objektklasse, hier der Geraden, charakterisieren, durchführen, sodass man für die eine Sender-Empfänger-Geometrie, welche auch als Messungsgeometrie bezeichnet wird, ein Reflexionsmuster errechnen kann, welches den einzelnen parametrisierten Objekten die entsprechenden erwarteten Laufzeiten oder bei einer Digitalisierung des Echosignals Indexwerte zuordnet, welche Laufzeiten zu Reflexionspunkten kennzeichnen, an denen eine Reflexion des Impulssignals stattfindet, wenn das entsprechend durch das Tupel parametrisierte Objekt als einziges in der Umgebung bei der entsprechenden Messungsgeometrie, d.h. Sender-Empfänger-Geometrie, vorhanden ist. Werden nun mehrere Impulsechomessungen für unterschiedliche Sender-Empfänger-Geometrien, d.h. Messungsgeometrien, durchgeführt, so lässt sich für jede dieser Sender-Empfänger-Geometrien das entsprechende Reflexionsmuster berechnen. Um nun Objekte in der Umgebung zu identifizieren, werden mehrere solcher in zeitlicher Folge oder, bei Einsatz mehrerer Empfangssensoren, teilweise gleichzeitig erfasste Echosignale für unterschiedliche Sender-Empfänger-Geometrien für die einzelnen im Parameterraum betrachteten möglicherweise vorhandenen Objekte ausgewertet und für die einzelnen Objekte jeweils Gewichte berechnet, die ein Maß dafür angeben, dass das entsprechende Objekt in der Umgebung vorhanden ist. Hierfür werden für ein Objekt, welches durch ein Parameterwert-Tupel identifiziert ist, zu jeder Empfangsgeometrie anhand des Reflexionsmusters die entsprechende erwartete Laufzeit oder die entsprechenden erwarteten Laufzeiten aus dem Reflexionsmuster entnommen und die zu diesen erwarteten Laufzeiten korrespondierenden Echosignalwerte summiert. Existiert beispielsweise wie bei der hier exemplarisch betrachteten Gerade pro Objekt genau eine erwartete Laufzeit, so wird aus jedem Echosignal genau ein Echosignalwert für das Bilden einer Summe der Echosignale verwendet, welche das Gewicht für das durch das Parameterwert-Tupel gekennzeichnete Objekt angibt. Man erhält somit für jedes betrachtete Objekt oder jedes das entsprechende Objekt kennzeichnende Tupel ein Gewicht, welches die Summe der entsprechenden Echosignalwerte zu den jeweils erwarteten Laufzeiten gemäß der zugehörigen Reflexionsmuster ist. Anhand dieser Gewichte lässt sich anschließend ermitteln, ob und gegebenenfalls welches oder welche Objekte in der Umgebung, welche vermessen wurde, vorhanden sind. Eine Verwendung der Echosignalwerte zum Erzeugen des Gesamtgewichts stellt nur eine mögliche Ausführungsform da. Allgemein wird anhand des oder der ermittelten Echosignalwerte jeweils ein Gewichtswert ermittelt und die Gewichtswerte zu dem Gesamtgewicht summiert. Das Gesamtgewicht wird auch als Gewicht bezeichnet.

Die einzelnen Gewichtswerte können anhand der Echosignalwerte in einer Umgebung um die erwartete Laufzeit herum ermittelt werden. Der Gewichtswert kann ein Normwert sein oder abhängig von der Signalintensität des Echoimpulses sein. Ein Normwert kann zugewiesen werden, wenn ein Echoimpuls als vorhanden angesehen wird. Dieses kann anhand eines Vergleichs mit einem Schwellenwert ermittelt werden. Ebenso kann ein Normechopuls, dessen Pulsschwerpunkt mit der erwarteten Laufzeit übereinstimmt, mit dem Echosignal verglichen werden. Als Gewicht kann ein Maß für eine Überlappung oder ein Übereinstimmen des Normpulses mit dem Echoimpuls im Echosignal genutzt werden. Es gibt viele weitere Möglichkeiten, die einzelnen Gewichtswerte zu ermitteln.

Insbesondere wird somit ein Verfahren zur Erfassung von Objekten in einer Umgebung eines Fahrzeugs vorgeschlagen, welches die Schritte umfasst: Ermitteln mindestens eines Reflexionsmusters für mindestens eine Objektklasse, wobei ein Reflexionsmuster für eine Sender-Empfänger-Geometrie einer Impuls-Echo-Messung jedem durch ein Parameterwert-Tupel charakterisierten Objekt der Objektklasse in der Umgebung, eine oder mehrere erwartete Laufzeiten zuordnet, zu der in dem Echosignal ein Echoimpuls erwartet wird oder werden, wenn nur das entsprechende durch das Parameterwert-Tupel gekennzeichnete Objekt in der Umgebung vorhanden ist, Ausführen von Impulsechomessungen für unterschiedliche Sender-Empfänger-Geometrien und Erfassen von Echosignalen bei diesen Impuls-Echo-Messungen; Errechnen von Gewichten für die unterschiedlichen durch die Parameterwert-Tupel charakterisierten Objekte der mindestens einen Klasse, indem für jedes Echosignal der oder die Echosignalwerte für jenen Zeitpunkt oder jene Zeitpunkte ermittelt wird oder werden, der oder die der oder den erwarteten Laufzeiten entsprechen, die anhand des dem Echosignal zugehörigen Reflexionsmusters dem Parameterwert-Tupel zugeordnet ist oder sind, und die so ermittelten Echosignalwerte oder aus den ermittelten Echosignalwerten abgeleiteter Gewichtswerte zu dem Gewicht summiert werden; und anhand der so ermittelten Gewichte das Vorliegen von Objekten der Klasse ermittelt wird.

Eine entsprechende Vorrichtung umfasst mindestens eine Impulsechomesseinrichtung, welche bei jeder Impulsechomessung ein Echosignal liefert, sowie eine Steuereinrichtung, welche eine Speichereinrichtung, in der für jede Sender-Empfänger-Geometrie für mindestens eine Objektklasse ein Reflexionsmuster abspeicherbar ist oder abgespeichert ist, und Rechnereinrichtung umfasst, um die erhaltenen Echosignale gemäß dem oben beschriebenen Verfahren zu verarbeiten. Hierbei kann die Verarbeitung programmgesteuert mittels einer programmierbaren Rechnereinrichtung oder parallelisiert in einer hierfür speziell geschaffenen Recheneinrichtung, beispielsweise einem zumindest teilweise programmierbaren Field Programmable Gate Array ausgeführt werden. Insbesondere wenn die Impulsechommesseinrichtung zumindest mehrere Empfangssensoren oder mehrere Sender umfasst oder sowohl mehrere Sender als auch Empfänger umfasst, sodass Impulsechomessungen für unterschiedliche Sender-Empfänger-Geometrien, ohne eine Eigenbewegung der Messeinrichtung auszuführen, möglich sind, können die für die Objektklasse notwendigen Reflexionsmuster vorteilhafterweise vorberechnet sein und so auch in geeigneter Weise in eine Schaltung umgesetzt sein. Werden beispielsweise Ultraschallwandler verwendet, die sowohl als Sender als auch als Empfänger nutzbar sind, so sind bei Messeinrichtungen, welche mehrere solcher Ultraschallwandler umfasst, die räumlich definiert starr zueinander angeordnet, einzelne erzeugbare Echosignale zueinander redundant, nämlich immer solche Kreuzkorrelationen, bei denen als Sender und Empfänger nicht ein und derselbe Ultraschallwandler genutzt wird. Nummeriert man beispielsweise die Ultraschallwandler, so gilt Folgendes: das Echoimpulssignal, welches von dem Ultraschallwandler 2 aufgefangen wird, während der Ultraschallwandler 1 als Sender benutzt wird, ist redundant zu dem Echosignal, welches von dem Ultraschallwandler 1 aufgenommen wird, während der Ultraschallwandler 2 als Sender benutzt wird. Hierbei wird angenommen, dass die Messeinrichtung sich bezüglich der Umgebung in Ruhe befindet. Solche redundanten Echosignale müssen somit weder erfasst noch ausgewertet werden.

Im Hinblick auf eine schnelle Auswertung werden Ausführungsformen bevorzugt, bei denen die Impulsechommesseinrichtung mehrere Sender und/oder mehrere Empfänger, besonders bevorzugt mehrere als Sender und Empfänger nutzbare Messsensoren, insbesondere Ultraschallwandler, umfasst, die starr relativ zueinander angeordnet sind. Für die hiermit erzeugbaren Echosignale für unterschiedliche Sender-Empfänger-Geometrien können die Reflexionsmuster für die einzelnen zu betrachtenden Objekte vorberechnet werden, so dass zum Zeitpunkt des Ausführens der Messung ein Rechenaufwand erheblich reduziert ist.

Bei einer bevorzugten Ausführungsform des Verfahrens werden das mindestens eine Reflexionsmuster und vorzugsweise auch die übrigen Reflexionsmuster zu den einzelnen Sender-Empfänger-Geometrien vor dem Erfassen der Echosignale errechnet.

Umfasst die Impulsechommesseinrichtung nur einen Sender und einen Empfänger, beispielsweise eine Messeinrichtung, insbesondere einen Ultraschallwandler, oder soll die Anzahl der ausgewerteten Echosignale bei einer Messeinrichtung mit mehreren Sendern und/oder Empfängern weiter erhöht werden, so können andere Messungsgeometrien bzw. Sender-Empfänger-Geometrien dadurch hergestellt werden, dass die Messeinrichtung im Raum, d.h. bezüglich eines ortsfesten Koordinatensystems, bewegt wird. Bei einem Fahrzeug findet dies im Fahrbetrieb ohnehin statt. In einem solchen Fall hängen die den einzelnen Messungsgeometrien zugehörigen Reflexionsmuster von der Bewegung des Fahrzeugs in der Umgebung ab, in der die parametrisierten Objekte als ortsfest angenommen sind. Dies ist gleichbedeutend damit, dass das Parameterwert-Tupel jeweils dasselbe ortsfest angenommene Objekt identifizieren muss. Obwohl die Relativanordnung von Sendern und Empfängern sich nicht ändert, ändern sich dennoch aufgrund der Relativbewegung die Sender-Empfänger-Geometrien, nämlich die Positionen der Messsensoren in der Umgebung. Somit ändern sich mit der Fahrzeugbewegung auch die zugehörigen Reflexionsmuster. Diese lassen sich jedoch durch einfache arithmetische Operationen an die neuen geometrischen Bedingungen anpassen. Eine Translation im Raum bewirkt beispielsweise bei der Parametrisierung von Geraden eine Änderung des entsprechenden Lotfußpunktabstands bezogen auf die Position des Senders bzw. Empfängers, welche abhängig von dem Winkel der Geraden im ortsfesten Koordinatensystem ist. Eine Drehung im Raum bewirkt hingegen lediglich eine Verschiebung im Parameterraum. Somit ist es vorteilhaft, in einer solchen Situation die mindestens eine Übertragungscharakteristik, d.h. die Reflexionsgeometrie oder das Reflexionsmuster, für den vollen Winkelbereich von 0° bis 360° im Parameterraum zu berechnen. Da jedoch die Translation "zu einer Verzerrung" des Reflexionsmusters führt, je weiter sich die Messeinrichtung von dem ursprünglichen Referenzpunkt im ortsfesten Koordinatensystem entfernt, ist eine regelmäßige Nachführung des Referenzpunktes notwendig. Alternativ ist es möglich, jeweils dasselbe Reflexionsmuster zu verwenden, jedoch vor einer Berechnung der Gewichte anhand der zurückgelegten Trajektorie aus einem oder mehreren Werten die aus einem Echosignal abgeleiteten Gewichtswerte, die dann in unterschiedlichen Parameterräumen bezüglich eines mitbewegten Referenzpunktes erfasst sind, aufeinander zu transformieren, bevor ein Gesamtgewicht, d.h. das Gewicht, aus mehreren Messungen, d.h. den Gewichtswerten für unterschiedliche Echosignale, gebildet wird.

Ein Vorhandensein eines Objekts kann anhand einer Schwellenwertbedingung für die entsprechenden Gewichte der jeweiligen Klasse ermittelt werden.

Häufig weichen die real existierenden Objekte jedoch insbesondere hinsichtlich ihrer Ausdehnung von idealisierten Objekten ab, die zur Klassifizierung verwendet werden. So treten in der realen Umgebung von Fahrzeugen selten unendlich lang ausgedehnte ebene Flächen auf, die mit durch Geraden approximierten Objekten korrespondieren. Im Hinblick auf einen jedoch nur begrenzten Erfassungsbereich, insbesondere eines möglichen Parkraums bei der Vorbeifahrt rechts und/oder links des Fahrzeugs, ist die Approximation einer Seitenwand eines Fahrzeugs durch eine Gerade beispielsweise durchaus sinnvoll. Ist die gerade ebene Fläche hinsichtlich ihrer Längsausdehnung kürzer als der Erfassungsbereich, so wäre es wünschenswert, dessen Ausdehnung ermitteln zu können. Hierfür ist bei einer bevorzugten Ausführungsform des Verfahrens vorgesehen, dass eine Ausdehnung eines erkannten Objekts ermittelt wird, indem in den einzelnen Echosignalen geprüft wird, ob der Echosignalwert für jenen Zeitpunkt, der der erwarteten Laufzeit entspricht, oder die Echosignalwerte bzw. für jene Zeitpunkte, die den erwarteten Laufzeiten entsprechen, die anhand des dem Echosignal zugehörigen Reflexionsmusters dem Parameterwert-Tupel zugeordnet ist oder sind, der das erkannte Objekt charakterisiert, eine vorgegebene Größe, beispielsweise einen weiteren Schwellenwert, überschreiten oder nicht und ein unterhalb dieser vorgegebenen Größe bzw. des vorgegebenen weiteren Schwellenwerts liegender Echosignalwert ein Indiz dafür genommen wird, dass sich das erkannte Objekt nicht bis zu jenem Reflexionspunkt erstreckt, an dem in der zugehörigen Sender-Empfänger-Geometrie eine Reflexion des Sendepulses an dem erkannten Objekt erfolgt, wenn dieses vollständig gemäß der der Parametrisierung als Parameterwert-Tupel zugrundeliegenden Annahme ausgedehnt ist. Sind erwartete Echoimpulse in einzelnen Echosignalen für ein erkanntes Objekt nicht vorhanden, so schließt man also hieraus, dass sich das erkannte Objekt nicht bis zu dem zugehörigen Reflexionspunkt erstreckt. Die Längenausdehnung kann somit ermittelt werden.

Ein weiterer besonderer Vorteil des Verfahrens liegt darin, dass erkannte Objekte quasi aus den Echosignalen entfernt werden können. Daher ist es bei einer Ausführungsform vorgesehen, dass modifizierte Echosignale erzeugt werden, indem jeweils die zu erkannten Objekten zugehörigen Signalanteile aus dem Echosignal entfernt werden. Dies kann beispielsweise erfolgen, indem die Echosignalwerte für jene Zeitpunkte, die den erwarteten Laufzeiten entsprechen, die für die Reflexionsgeometrie und das erkannte Objekt festgelegt sind, auf null gesetzt werden oder dass an jenen Positionen ein Normsignalpuls abgezogen wird.

Insbesondere ist es möglich, mit den modifizierten Echosignalen die Auswertung erneut auszuführen und die Gewichte neu zu berechnen, sodass weitere, ein schwächeres Signal liefernde Objekte derselben Klasse oder Objekte einer anderen Klasse ermittelt werden können. Es versteht sich, dass diese Schritte wiederholt und auch iterativ für dieselbe oder unterschiedliche Klasse von Objekten ausgeführt werden können.

Ferner kann anhand der modifizierten Signale auch eine Multilateration, beispielsweise eine Trilateration, ausgeführt werden, um weitere Objekte in der Umgebung zu erkennen.

Ebenso ist es möglich, bei einer Ausführungsform die erkannten Objekte in eine Umgebungskarte einzufügen, in der jeder Raumzelle eine Wahrscheinlichkeit zugeordnet ist, das Einfügen über einen Wahrscheinlichkeitsansatz, beispielsweise nach dem Bayes'schen Theorem, auszuführen, wobei den Raumpunkten, die der Kontur des erkannten Objekts entsprechen, zuvor eine Existenzwahrscheinlichkeit für das Objekt zugeordnet wird.

Bei einer Ausführungsform ist vorgesehen, dass für mindestens zwei Klassen von Objekten getrennt Gewichte für das Vorhandensein von Objekten ermittelt werden und diese Ermittlung im Wesentlichen zeitgleich mit denselben unmodifizierten oder gleichmodifizierten Echosignalen ausgeführt wird.

Nachfolgend wird die Erfindung anhand eines bevorzugten Ausführungsbeispiels unter Bezugnahme auf eine Zeichnung näher erläutert. Hierbei zeigen:

Fig. 1    schematische Darstellung eines Fahrzeugs mit einer Messeinrichtung in seiner Umgebung;

Fig. 2    eine schematische Darstellung eines Fahrzeugs mit einer Messeinrichtung in einer Umgebung, welche eine Gerade umfasst zur Erläuterung der auftretenden Signalausbreitungswege und zur Erläuterung der Zuordnung eines Objekts zu einem Punkt in einem Parameterraum;

Fig.3a-3d    grafische Darstellungen von Reflexionsmustern;

Fig. 4a-4j    exemplarische grafische Darstellungen zeitaufgelöst erfasster Echosignale;

Fig. 5    schematische Darstellung der Gewichte für mögliche Objekte in der Umgebung im Parameterraum einer Objektklasse und

Fig. 6    eine Abstandsänderung der Geraden abhängig vom Winkel bei einer Fahrzeugtranslation um 20 cm in einer x-Richtung und 20 cm in einer y-Richtung eines zweidimensionalen Raumes.

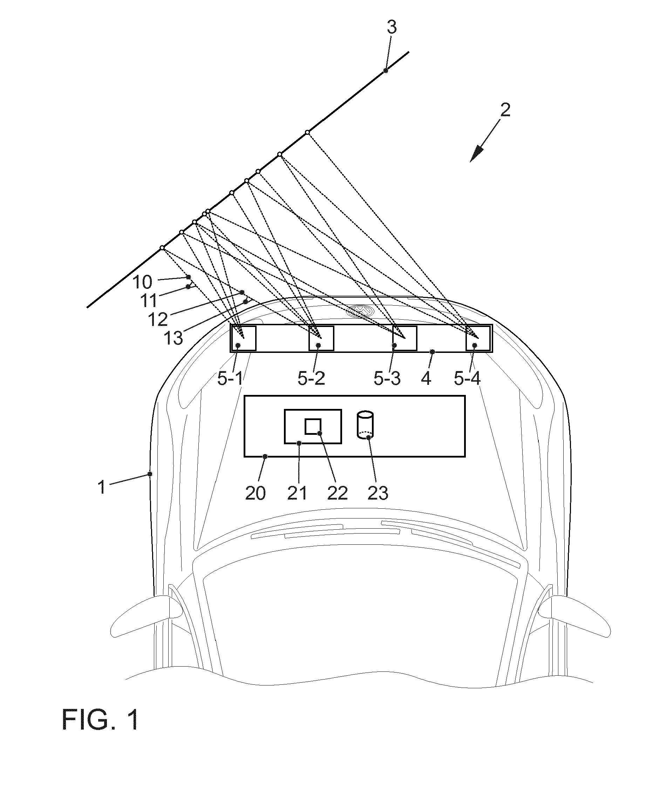

In Fig. 1 ist schematisch ein Kraftfahrzeug 1 dargestellt, welches sich in einer Umgebung 2 befindet. In der Umgebung 2 des Kraftfahrzeugs befindet sich eine durch eine Gerade 3 darstellbare ebene Fläche. Das Kraftfahrzeug 1 umfasst eine Impulsechomesseinrichtung 4, welche vier als Sender und Empfänger dienende Messsensoren 5-1 bis 5-4 umfasst. Diese Messsensoren 5-1 bis 5-4 können beispielsweise Schallwandler sein, die als Ultraschallsender und als Ultraschallempfänger dienen können. Die Impulsechomesseinrichtung 4 ist ausgebildet, über einen der Messsensoren 5-1 bis 5-4 ein Sendesignal 10 mit einem Sendeimpuls 11 in die Umgebung 2 auszusenden. Dieses Signal wird an der als Gerade 3 approximierten ebenen Fläche reflektiert, so dass zu den Messsensoren 5-1 bis 5-4 jeweils ein reflektiertes Echosignal 12 mit einem oder mehreren Echopulsen 13 zurückreflektiert wird. Die Messsensoren 5-1 bis 5-4 empfangen somit jeweils ein Echosignal. Auch dieses empfangene und gegebenenfalls digitalisierte Signal wird als Echosignal bezeichnet.

Eine Lösung des Huygens'schen Beugungsintegrals für ausgedehnte Flächenreflektoren zeigt, dass die Reflexion einem Reflexionsgesetz folgt, welches aussagt, dass der Einfallswinkel der reflektierten Strahlung bezüglich der Oberflächennormale gleich dem Ausfallswinkel des reflektierten Signals bezüglich der Oberflächennormale ein Reflexionpunkt ist. Wird ein Signal von einem der Messsensoren 5-1 bis 5-4, beispielsweise dem Messsensor 5-1, ausgesandt, wo gibt es vier Signallaufwege zurück zu den verschiedenen Messsensoren 5-1 bis 5-4. Führt man Impulsechomessungen in der Weise aus, dass die verschiedenen Messsensoren zeitlich nacheinander versetzt jeweils einmal als Sender verwendet werden, so zeigt es sich, dass es beispielsweise für das hier grafisch dargestellte Problem zehn unterschiedliche Signalübertragungswege gibt. Dies bedeutet, dass es auf der als Gerade approximierten ebenen Fläche zehn Reflexionspunkte der unterschiedlichen auftretenden Signalausbreitungswege gibt. Da der Signalausbreitungsweg von einen Sensor zu dem anderen Sensor gleich dem Ausbreitungsweg von dem anderen Sensor zu dem einen Sensor ist, gleichen sich einige Echosignale unterschiedlicher Echoimpulsmessungen. Insgesamt lassen sich mit N Sensoren I nicht redundante Übertragungswege vermessen.

$$I = \frac{(N + 2 - 1)!}{2!\,(N - 1)!},$$

Die mittels der Impulsechomesseinrichtung 4 erfassten Echosignale werden an eine Steuereinrichtung 20 übermittelt, welche eine beispielsweise programmgesteuerte Rechnereinrichtung 21 umfasst. Diese kann beispielsweise einen Prozessor 22 umfassen der mit einem Speicher 23 gekoppelt ist, in dem ein Ausführerprogrammcode abgelegt ist, der die Auswertungsfunktionalität der Steuereinrichtung 20 festlegt. In dem Speicher 23 sind für unterschiedliche Objektklassen Reflexionsmuster, beispielsweise in Form von Tabellen, hinterlegt. Die Rechnereinrichtung 21 kann auch als verdrahtete Schaltung ausgebildet sein. In dieser können ebenfalls zumindest teilweise die Reflexionsmuster in der Ausgestaltung der Schaltung gespeichert sein. Dann ist das Vorliegen eines Speichers nicht unbedingt erforderlich. Die Reflexionsmuster werden, wie nachfolgend erläutert wird, genutzt, um anhand der erfassten Echosignale Gewichte für in der Umgebung 2 möglicherweise vorhandene Objekte mindestens einer Objektklasse zu bestimmen und anhand der so ermittelten Gewichte zu entscheiden, ob und gegebenenfalls welche dieser Objekte einer Klasse in der Umgebung vorhanden sind. Ferner kann in dem Speicher 23 eine Umgebungskarte abgelegt sein, in die die erkannten Objekte eingetragen werden. Die Steuereinrichtung 20 kann darüber hinaus die Funktionalität aufweisen, die Echosignale auch nach anderen bekannten Verfahren auszuwerten, um zusätzliche Informationen zum Erstellen einer Umgebungskarte zu gewinnen und in diese zu integrieren. Die Steuereinrichtung 20 kann mit der Impulsechomesseinrichtung 4 so kombiniert sein, dass die einzelnen Impulsechomessungen ebenfalls von der Steuereinrichtung 20 gesteuert werden.

Die Auswertung der Impulsechomesssignale, welche hier als Echosignale bezeichnet werden, erfolgt in der Weise, dass die Umgebung auf eine Existenz von Objekten mindestens einer Klasse von Objekten untersucht wird. Hierzu ist es notwendig, die Objekte einer Klasse zu parametrisieren. Beispielhaft soll dies für Geraden im Folgenden erläutert werden.

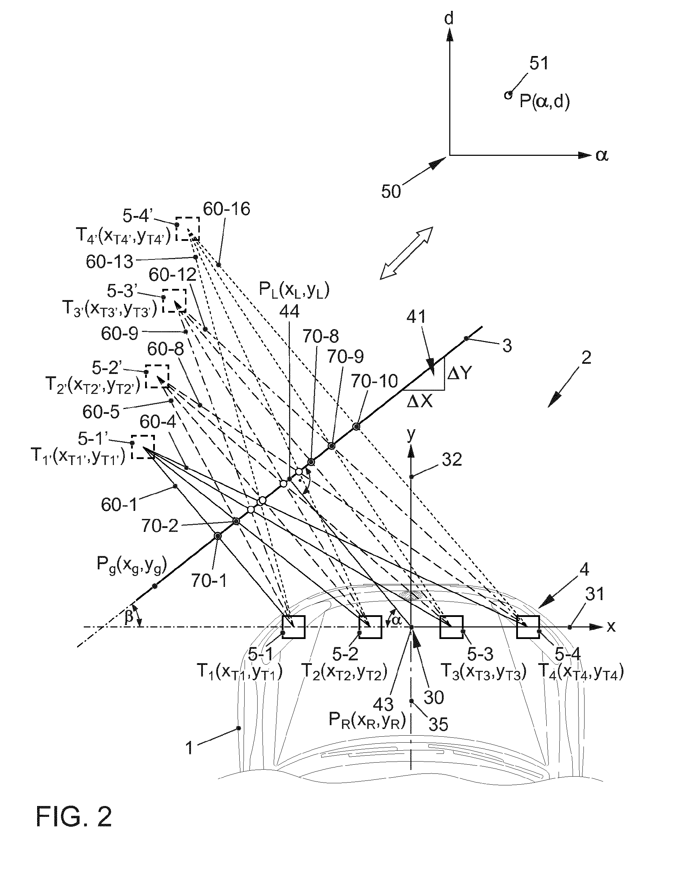

In Fig. 2 ist eine Gerade 3 in der Umgebung 2 des Kraftfahrzeugs 1 dargestellt. Gleiche technische Merkmale sind in den Figuren mit denselben Bezugszeichen versehen. Mit der Umgebung 2 ist ein ortsfestes Koordinatensystem 30 verknüpft, welches eine x-Achse 31 und eine y-Achse 32 aufweist. Zunächst wird ein Referenzpunkt 43 mit den Koordinaten $(x_R, y_R)$ festgelegt. Beispielhaft wird dieser Referenzpunkt auf der Fahrzeugmittelachse 35 mittig zwischen den Messsensoren der Impulsechomesseinrichtung 4 gewählt, die auf einer Linie 36 senkrecht zur Fahrzeugmittelachse und in der dargestellten Situation parallel zur x-Achse 31 des Koordinatensystems 30 ausgerichtet ist. Bei der dargestellten Ausführungsform fällt ein Ursprung des Koordinatensystems 30 mit dem Referenzpunkt 43 zusammen. Allgemein lassen sich die Punkte auf der Geraden 3 gemäß folgender Formel berechnen:

$$g = \begin{pmatrix} x_g \\ y_g \end{pmatrix} + \psi \cdot \begin{pmatrix} \Delta_x \\ \Delta_y \end{pmatrix}$$

wobei $\psi$ eine beliebig reelle Zahl ist und $x_g$, $y_g$ die Koordinaten eines beliebigen Punkts auf der Geraden 3 darstellen sowie $\Delta X$ und $\Delta Y$ die Achsenabschnitte eines Steigungsdreiecks 41 sind. Diese Darstellung lässt sich jedoch in die so genannte Hesse-Normalform überführen. Der Abstand $d_L$ einer Gerade zu dem Referenzpunkt ist die Strecke entlang einer Normale 42 der Gerade 3, die durch den Referenzpunkt 43 verläuft. Der Lotfußpunkt 44 der Gerade, welcher die Koordinaten $x_L, y_L$ besitzt, ist durch folgende Gleichung gegeben:

$$P_L = \begin{pmatrix} x_g \\ y_g \end{pmatrix} + \left( \frac{(x_R - x_g) + (y_R - y_g) \cdot \tan\left(\frac{\pi}{2} - \alpha\right)}{\Delta_x \cdot \left(1 + \left(\tan\left(\frac{\pi}{2} - \alpha\right)\right)^2\right)} \right) \cdot \begin{pmatrix} \Delta_x \\ \Delta_y \end{pmatrix} \cdot$$

Für den Abstand $d_L$ gilt folgende Gleichung

$$g: (x - x_R) \cdot cos(\alpha) + (y - y_R) \cdot sin(\alpha) - d_L = 0$$

Um eine Gerade genau zu parametrisieren, ist zusätzlich noch ein Winkel $\alpha$ gemessen gegen eine Koordinatenachse, beispielsweise hier die x-Achse, nötig. Es zeigt sich somit, dass jeder Geraden ein Parametersatz $(p_1, .... p_n)$ zugeordnet werden kann. Somit existiert ein Parameterraum 50, in dem jeder Punkt, der durch ein Parameter-Tupel $(d, \alpha), (p_1, ..., p_n)$ definiert ist, ein Objekt der Klasse K charakterisiert. Der Punkt 51 repräsentiert die Gerade 3. Andere Punkte des Parameterraumes 50 repräsentieren andere Geraden. Bei dem Objekttyp Gerade G ist dieser Parameterraum zweidimensional. Parameterräume anderer Objekte können eine höhere Dimension aufweisen, beispielsweise sind die Objekte der Klasse der kreisförmigen Objekte, bei der Betrachtung eines zweidimensionalen Bildraumes oder Umgebungsraumes durch drei Parameter definierbar, wobei beispielsweise der Abstand zwischen dem Referenzpunkt und dem Mittelpunkt, der Winkel der den Referenzpunkt und den Mittelpunkt verbindenden Gerade gegen eine Koordinatenachse und der Radius des Kreises die drei Parameter darstellen.

Um entscheiden zu können, welche Objekte tatsächlich in der Umgebung vorhanden sind, wird in der Regel eine Diskretisierung des Parameterraums vorgenommen, welches gleichbedeutend damit ist, dass nur eine bestimmte Anzahl der unendlich vielen möglichen Objekte der Klasse in der Umgebung betrachtet wird. Beispielsweise wird eine Variation des Abstands in 0,01 m Schritten und eine Winkelauflösung von 1° gewählt.

Für diese dann abzählbare Anzahl von durch die Parameter charakterisierten Objekten einer Klasse, deren Anzahl ferner durch die räumliche Eingrenzung der Messbereiche der Umfeldsensorik beschränkt ist, soll nun anhand der empfangenen Echosignale ermittelt werden, ob diese vorhanden oder nicht vorhanden sind.

Um diese Ermittlung auszuführen, wird zunächst von der Erkenntnis Gebrauch gemacht, dass wie oben bereits erwähnt nur bestimmte Signalausbreitungswege möglich sind. In Fig. 2 sind die möglichen Signalausbreitungswege für alle Messungen dargestellt, die mit einer Impulsechomesseinrichtung 4 ausführbar sind, welche vier Messsensoren 5-1 bis 5-4 umfasst. Mathematisch lassen sich diese Signalausbreitungswege bestimmen, indem zunächst die Lotfußpunkte $L, T_i$ für Normalen 51-1 bis 51-4 zu den einzelnen Messsensoren 5-1 bis 5-4 bestimmt werden. Gemäß der oben angegebenen Formel ergibt sich für die Lotfußpunkte:

$$\begin{pmatrix} x_{L,T_i} \\ y_{L,T_i} \end{pmatrix} = \begin{pmatrix} x_{T_i} - \cos(\alpha) \cdot \left[ d_L - \left( \cos(\alpha) \cdot (x_R - x_{T_i}) + \sin(\alpha) \cdot (y_R - y_{T_i}) \right) \right] \\ y_{T_i} - \sin(\alpha) \cdot \left[ d_L - \left( \cos(\alpha) \cdot (x_R - x_{T_i}) + \sin(\alpha) \cdot (y_R - y_{T_i}) \right) \right] \end{pmatrix}$$

Hierbei sind die Messsensoren 5-1 bis 5-4 als $T_i$ gekennzeichnet. Mit Kenntnis dieser Lotfußpunkte, welche zugleich auch Reflexionspunkte für die Impulsechomessungen sind, bei denen der sendende Wandler selbst als Empfänger dient, lassen sich gespiegelte Sensorpositionen errechnen:

$$\begin{pmatrix} x_{T_i'} \\ y_{T_i'} \end{pmatrix} = \begin{pmatrix} x_{L,T_i} + (x_{T_i} - x_{L,T_i}) \\ y_{L,T_i} + (y_{T_i} - y_{L,T_i}) \end{pmatrix}$$

Als Reflexionspunkte des Objekts, hier der Geraden 3, treten nur solche Punkte in den Messungen auf, welche Schnittpunkte 70-1 bis 70-10 einer Verbindungslinie 60-1 bis 60-16 von einem gespiegelten Messsensor 5-1' bis 5-4' und einem realen Messsensor 5-1 bis 5-4 sind. Insgesamt ergeben sich zehn solcher Schnittpunkte 70-1 bis 70-10, wobei einige auf mehreren Übertragungswegen und Verbindungslinien 60 liegen. Die Positionen der Schnittpunkte 70-1 bis 70-10 ergeben sich gemäß folgender Gleichung:

$$\begin{pmatrix} x_{refl,ij} \\ y_{refl,ij} \end{pmatrix} = \begin{pmatrix} x_g \\ y_g \end{pmatrix} + \frac{\left(y_{T'_i} - y_g\right)\left(x_{T'_i} - x_{T_j}\right) + \left(x_g - x_{T'_i}\right)\left(y_{T'_i} - y_{T_j}\right)}{\left(x_{T'_i} - x_{T_j}\right) \cdot \Delta_y + \left(y_{T'_i} - y_{T_j}\right) \cdot \Delta_x} \begin{pmatrix} \Delta_x \\ \Delta_y \end{pmatrix}$$

Für die Laufzeiten $T_{j,i}$ zwischen den einzelnen Messsensoren 5-1 bis 5-4 ($T_i$, $T_j$) gilt Folgendes:

$$\tau_{i,j} = \frac{\sqrt{\left(x_{T'_i} - x_{T_j}\right)^2 + \left(y_{T'_i} - y_{T_j}\right)^2}}{c}$$

Hierbei geben i und j jeweils den Index des Messsensors an, wobei vorausgesetzt wird, dass diese durchnummeriert sind, beispielsweise von 1 bis 4. c ist die Signalgeschwindigkeit in der Umgebung.

Betrachtet man nun die verschiedenen Signalübertragungswege, welche nicht redundant sind, so zeigt es sich, dass in dem empfangenen Echosignal einer Sender-Empfänger-Geometrie nur zu einem Zeitpunkt ein Echoimpuls auftreten kann, der durch eine Reflexion an der Geraden 3 verursacht ist. Somit liefert ein Echosignal einen Hinweis auf das Vorliegen eines bestimmten Objekts nur dann, wenn zu der aufgrund der Reflexionsgeometrie bzw. des Reflexionsmusters für die bestimmte Sender-Empfänger-Geometrie in dem Echosignal ein Echosignalwert oberhalb einer Rauschschwelle zu dem Zeitpunkt auftritt, der einer Laufzeit einer Signalausbreitung über diesen möglichen Reflexionspunkt entspricht. Bei einer Geraden kann dies genau für jedes Echosignal nur ein Echoimpuls bei Vernachlässigung von Mehrfachreflexionen zwischen Sender, Empfänger und Wand sein. Bei anders ausgestalteten Objekten können auch für eine Sender-Empfänger-Geometrie mehrere Reflexionspunkte und somit mehrere Signallaufzeiten existieren, zu denen Echoimpulse erwartet werden, wenn sich das Objekt als einziges Objekt in der Umgebung befindet. Daher ist es vorgesehen, für die einzelnen Sender-Empfänger-Geometrien für jede Objektklasse K, also hier beispielhaft für die Objektklasse G der Geraden, für jede der durch einen Punkt in den Parameterraum charakterisierte bzw. identifizierte Gerade die entsprechende charakteristische erwartete Laufzeit $\tau(d,\alpha)$ dem Parameterwert-Tupel $(d,\alpha)$ zuzuordnen, welches das entsprechende Objekt charakterisiert. Dieses kann beispielsweise in Form einer Tabelle erfolgen, in der den Parameterwert-Tupeln die entsprechende oder die entsprechenden erwarteten Signallaufzeiten zugeordnet sind. Eine solche Zusammenstellung wird als Reflexionsmuster R bezeichnet.

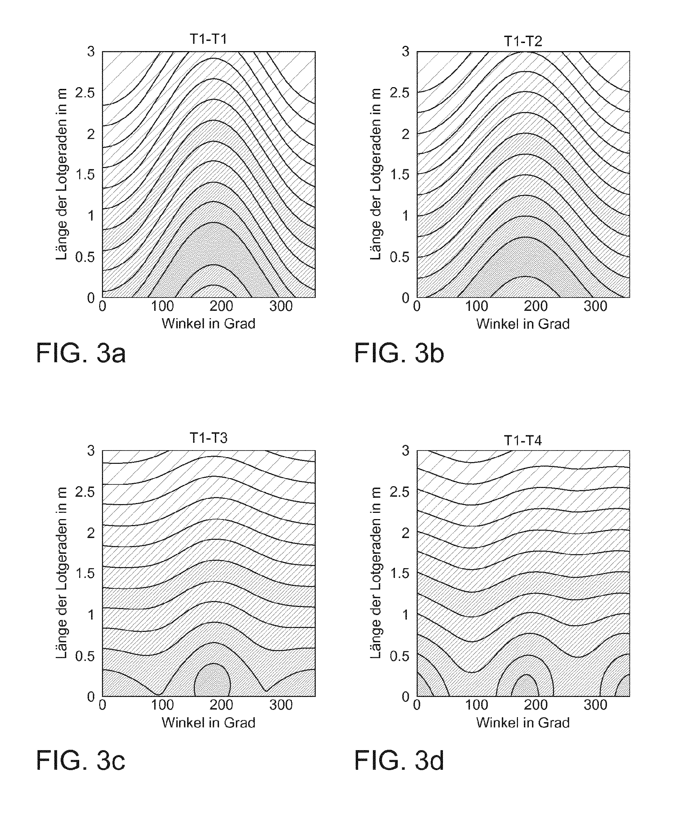

In den Fig. 3a bis 3d sind exemplarisch solche Reflexionsmuster $R^{(G)}_i$, für die Objektklasse G der Geraden und die Sender-Empfänger-Geometrie i, grafisch dargestellt, wobei hier die dem jeweiligen Parameterraumpunkt $P(d,\alpha)$ (oder allgemein ausgedrückt $P(p_1,...,p_n)$) zugehörige Signallaufzeit $T_i(d,\alpha)$ (oder allgemein ausgedrückt $T_i(p_1,...,p_n)$) über eine Graustufenschattierung bzw. Schraffurdichte angedeutet ist. Gezeigt sind hier exemplarisch nur die Reflexionsmuster für die Sender-Empfänger-Geometrien, bei denen der Messsensor 1 als Sender und die Messsensoren 1, 2, 3 und 4 jeweils als Empfänger verwendet sind.

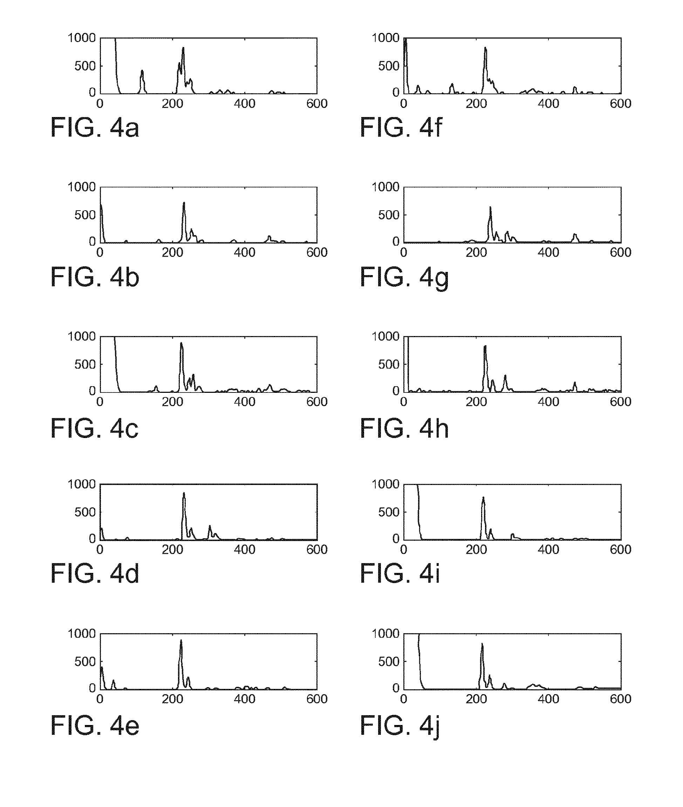

In den Fig. 4a bis 4j sind exemplarisch die nicht redundanten Echosignale für einen Satz von Messungen grafisch aufgetragen. Aufgetragen ist jeweils die Echosignalintensität gegenüber der Messzeit, wobei die Messzeit über einen Index angegeben ist. Die Messzeit ist dann gegeben durch den Indexwert mal dem Kehrwert der Abtastfrequenz. Sinnvoll ist es selbstverständlich, die erwarteten Signallaufzeiten in analoger Weise gemäß der verwendeten Abtastfrequenz der Echosignalstärke ebenfalls als Indexwerte zu speichern. Da ein Echoimpuls zu einer bestimmten Signallaufzeit in einem Echosignal nicht einen bestimmten Punkt in der Umgebung als möglichen Reflexionspunkt charakterisiert, sondern nur einen Punkt auf einem Kreissektor, in dessen Mittelpunkt ein zugleich als Sender und Empfänger verwendeter Messsensor angeordnet ist, oder einen Punkt auf einem Abschnitt einer Ellipse kennzeichnet, in deren Brennpunkten sich der als Sender verwendete Messsensor und der als Empfänger verwendete Messsensor befinden, liefert ein Echoimpuls in einem Echosignal für unterschiedliche Objekte, d.h. unterschiedliche Geraden, einen Hinweis für deren Existenz. Alle Geraden, die eine Tangente zu dem entsprechenden Kreissegment bzw. Ellipsensegment darstellen, weisen einen Reflexionspunkt auf, dessen charakteristische erwartete Laufzeit mit der des entsprechenden Echopulses übereinstimmt. Für die einzelnen betrachteten Objekte in dem Parameterraum (d.h. alle Punkte im Parameterraum) errechnet man nun ein Gewicht, indem man für jedes erfasste nicht redundante Echosignal aus dem Reflexionsmuster zu der zugehörigen Sender-Empfänger-Geometrie den oder die charakteristischen Laufzeiten entnimmt und an diesen Zeitpunkten bzw. den zugehörigen Indexwerten nachprüft, ob das Echosignal an dieser Zeitposition einen Echoimpuls aufweist. Hierbei wird ein Gewichtswert bestimmt. Beispielsweise kann die Echosignalstärke an dem entsprechenden Zeitpunkt bzw. Indexwert oder eine Normgröße als Gewichtswert verwendet werden, sofern der Echosignalwert oberhalb eines Schwellenwertes liegt. Möglich ist es auch, einen Normechopuls, der an dem erwarteten Reflexionszeitpunkt zu erwarten wäre, mit dem Echosignal zu der entsprechenden Zeit zu vergleichen und hieraus einen Gewichtswert abzuleiten. Bei der einfachsten Ausführungsform werden die so erhaltenen Echosignalwerte der unterschiedlichen ausgewerteten Echosignale für das jeweilige Objekt als Gewichtswerte verwendet und einfach addiert, um das Gewicht für das Objekt zu erhalten. Dies bedeutet, dass für das erste Echosignal anhand des zugehörigen Reflexionsmusters die entsprechende erwartete Signallaufzeit für einen Echoimpuls ermittelt wird und der Echosignalwert zu dieser ermittelten Zeit zu dem Echosignalwert des zweiten Echosignals addiert wird, der zu einem Zeitpunkt auftritt, zu dem gemäß dem Reflexionsmuster zu dem zweiten Echosignal ein Echoimpuls erwartet wird, wenn das entsprechende Objekt in der Umgebung vorhanden ist, usw. Für eine Gerade werden somit jeweils zehn Gewichtswerte $g_i$, beispielsweise zehn Echosignalwerte $e_i$ oder zehn Normwerte, addiert. Dies ist beispielhaft in folgender Gleichung dargestellt:

$$W(\alpha, d_L) = \sum_{i=1}^{10} g_i\big(\tau_i(\alpha, d_L)\big)$$

Anstelle der Echosignalwerte können so genannte Gewichtswerte genutzt werden, die anhand der Echosignalwerte ermittelt werden.

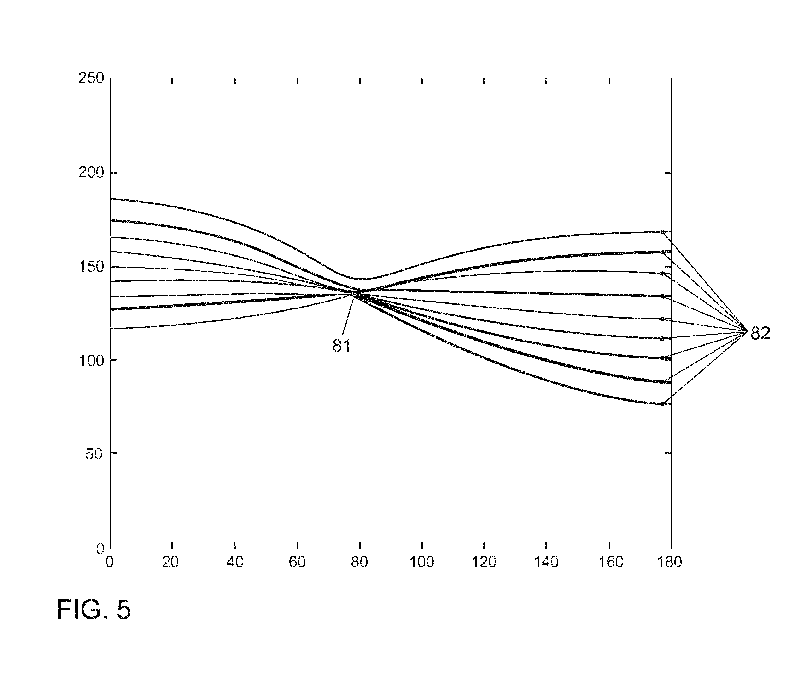

Für alle Parameterwert-Tupel wird somit ein solches Gewicht W berechnet. Stellt man die so errechneten Gewichte über Helligkeitswerte dar, so erhält man Fig. 5. In einem Punkt 81 schneiden sich mehrere sinusförmige Kurven 82. Dieser Schnittpunkt 81 weist die größte Helligkeit auf, welche ein Indiz dafür liefert, dass die zu diesen Parametern gehörige Gerade in der Umgebung vorhanden ist. Sind mehrere Objekte in der Umgebung vorhanden, so erscheinen selbstverständlich mehrere Punkte hoher Intensität, anhand derer auf die Existenz dieser Objekte zurückgeschlossen werden kann.

Ein Vorteil dieser Methode besteht darin, dass erkannte Objekte bzw. deren zugehörige Echosignalanteile aus den Echosignalen entfernt werden können. Hierzu wird anhand des Reflexionsmusters in dem jeweiligen Echosignal die Zeit ermittelt, zu der der Echoimpuls eingetroffen ist, der an dem erkannten Objekt reflektiert ist. Die entsprechende Signalintensität kann somit aus dem Echosignal eliminiert werden. Entweder können die Echosignalwerte an dem entsprechenden Zeitpunkt oder in einem Umgebungsbereich um den Zeitpunkt gänzlich auf einen Signalwert gesetzt werden, der einem Rauschwert entspricht, oder beispielsweise ein Normpuls, dessen Zeitschwerpunkt mit der erwarteten Signallaufzeit übereinstimmt, von dem Echosignal abgezogen werden. Anhand der so modifizierten Echosignale kann nun eine erneute Auswertung für dieselbe Objektklasse oder eine andere Objektklasse ausgeführt werden, um so auch schwächer reflektierende Objekte erkennen zu können.

Ebenso ist es alternativ oder zusätzlich möglich, eine Ausdehnung des Objekts zu ermitteln. Hierbei wird geprüft, in welchen Echosignalen zu den erwarteten Signallaufzeiten, welche erneut anhand der Reflexionsmuster ermittelt werden, in den entsprechenden Echosignalen tatsächlich ein einem Echoimpuls entsprechender Echosignalwert vorhanden ist. Tritt für einen Reflexionspunkt, d.h. in einem Echosignal zu dem Zeitpunkt, welcher mit dem entsprechenden Reflexionspunkt korrespondiert, kein Echoimpuls an der erwarteten Stelle auf, so kann daraus geschlossen werden, dass sich das entsprechende Objekt, in dem beschriebenen Beispielsfall die Gerade, nicht bis zu der Position in der Umgebung erstreckt, an der der entsprechende Reflexionspunkt liegt.

Das beschriebene Verfahren lässt sich jedoch auch auf Situationen anwenden, bei denen eine geringere Anzahl oder nur ein Messsensor vorhanden ist, sich das Fahrzeug jedoch relativ zu der Umgebung bewegt. In einem solchen Fall sind eine oder mehrere Reflexionsgeometrien für die Sender-Empfänger-Geometrie bzw. Sender-Empfänger-Geometrien vorberechnet, welche für die Auswertung von Messungen im ruhenden Zustand des Fahrzeugs benötigt werden.

Bei zeitlich nachfolgend aufgenommenen Messungen verändert sich bei einer Betrachtung des Problems eine Position des mit dem Fahrzeug verknüpfte Referenzpunkts relativ zu den ortsfesten Objekten. Dieser Referenzpunkt und hiermit auch der hiermit verknüpfte Parameterraum werden bei dieser Betrachtungsweise als gekoppelt an die Signalechomesseinrichtung angesehen. Folglich verändern sich für die Objekte in der Umgebung die entsprechenden Parameter bezüglich des nun fortbewegten Referenzpunktes und hiermit verknüpften Parameterraums. Die unterschiedlichen Fahrzeugpositionen zugeordneten Parameterräume unterscheiden sich, so dass ein und dasselbe Parametertupel in unterschiedlichen Parameterräumen unterschiedliche Objekte identifiziert. Dieses wird bei dieser Betrachtungsweise durch eine Transformation der unterschiedlichen Parameterräume aufeinander gelöst, so dass die in einem bewegten Fahrzeug zu unterschiedlichen Zeitpunkten, d.h. an unterschiedlichen Orten, erfassten und ausgewerteten Messsignale im Parameterraum fusioniert werden können. Sind somit im Fahrzeug mehrere Sensoren verbaut, so dass zu jedem Zeitpunkt zeitgleich mehrere Echosignale erfasst werden, so können die vorberechneten Reflexionsmuster genutzt werden um eine Auswertung der Echosignale in dem jeweils "aktuellen", zur Referenzposition der aktuellen Fahrzeugposition zugehörigen Parameterraum vorzunehmen. Da der Referenzpunkt sich bezüglich der ortsfesten Objekte jedoch von Messzeitpunkt zu Messzeitpunkt ändert, ist eine Transformation dieser Parameterräume aufeinander notwendig, um Auswertungen von an unterschiedlichen Orten ausgeführten Messungen in einem Parameterraum für einen ortsfesten Referenzpunkt zu fusionieren. Die Transformationen sind von der Fahrzeugbewegung abhängig.

Bei einer anderen Betrachtungsweise geht man davon aus, dass die Bezeichnung und Charakterisierung der einzelnen Objekte jeweils bezüglich des zuerst verwendeten Referenzpunktes, welcher als ortsfest in der Umgebung angenommen wird, erfolgt, so sind die Reflexionsmuster aufgrund der Fahrzeugbewegung dahingehend anzupassen, dass sich nun die erwarteten Signallaufzeiten für die Sender-Empfänger-Geometrie verändert haben. Beide Betrachtungsweisen sind äquivalent. Die Veränderungen lassen sich anhand geometrischer Überlegungen für die jeweils erfolgte Fahrzeugbewegung berechnen. Insbesondere wenn nur ein Sensor verwendet wird, ist eine Auswertung gemäß dieser zweiten Betrachtungsweise meist vorteilhaft. Für die Objektklasse der Geraden können die Werte für die erwartete Laufzeit für einen Winkelwert alle um den gleichen Betrag in dem Reflexionsmuster angepasst werden. Die Größe der Anpassung hängt erneut von der Fahrzeug Bewegung. Sind die Parameterwerte in einer matrixartigen Tabelle angeordnet, so dass die Zeilennummer mit dem Abstand und die Spaltennummer mit dem Winkel im Parameterraum verknüpft sind, so sind die Werte einer Spalte jeweils um denselben Betrag abhängig von der Translation des Fahrzeugs im Raum zu ändern ist. Eine Rotation des Fahrzeugs (der Messeinrichtung) im Raum ist durch eine "Verschieben" der Spalten, d. h. eine Änderung der Zuweisung der Winkelposition zu den Spalten, zu kompensieren.

Während eine Anpassung der Bewegung im Bildraum eine Multiplikation jedes Bildpunktes mit einer Rotationsmatrix und eine anschließende Verschiebung erfordern würde, lässt sich die Abbildung der entsprechenden Objekte im Parameterraum durch eine sehr viel geringere Anzahl von Translationen realisieren. Insgesamt werden n+1 Translationen benötigt, wobei die Anzahl n durch den betrachteten Winkelbereich und die Winkelauflösung bestimmt ist. Es gilt n = Winkelbereich: Auflösung. Wird beispielsweise ein Winkelbereich von 180° mit einer Winkelauflösung von 1° betrachtet, so sind 180 + 1 Translationen notwendig. Zum einen ändert sich nämlich der Abstand der Geraden von dem bewegten Referenzpunkt, wobei diese Abstandsänderung winkelabhängig ist, so dass diese Abstandsänderung für jeden Winkel einmal zu berechnen ist. Die Abstandsänderung in Abhängigkeit von dem Rotationswinkel der Impulsechomesseinrichtung relativ zu den Objekten ergibt sich gemäß folgender Gleichung:

$$\Delta d(\alpha) = \cos(\alpha) \cdot (x_{P1} - x_P) + \sin(\alpha) \cdot (y_{P1} - y_P).$$

$(x_p, y_p)$ und $(x_{p1}, y_{p1})$ geben die Koordinaten des Fahrzeugs an. Zusätzlich ist die eine weitere Translation durch die Rotation um den Winkel $\gamma$ des Fahrzeugs relativ zu den Objekten bedingt:

$$\alpha_{P1} = \alpha_P + \gamma$$

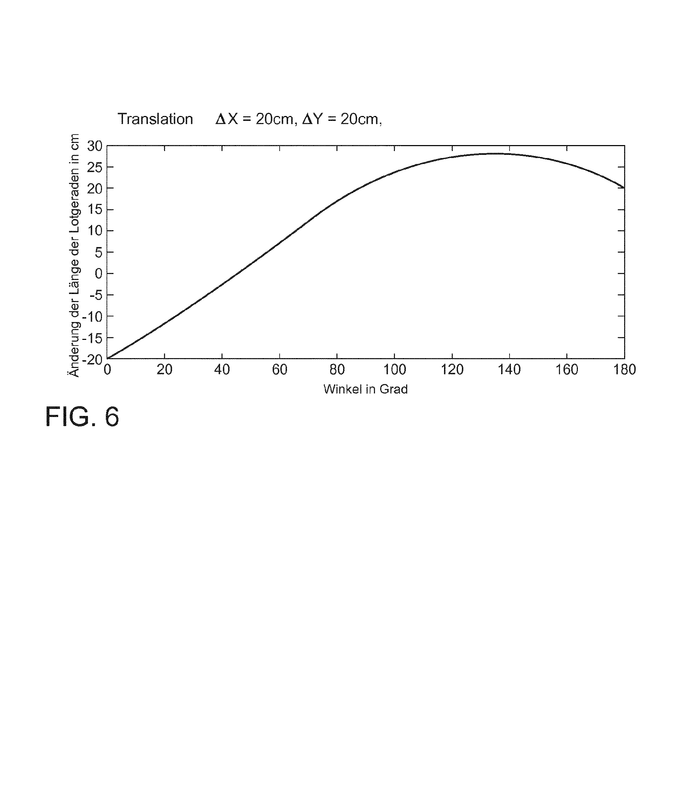

In Fig. 6 sind für eine Translation von 20 cm in der x-Richtung und 20 cm in der y-Richtung grafisch die Abstandsänderungen zu den einzelnen Geraden abhängig von dem Winkelparameter $\alpha$ aufgetragen. Somit wird es möglich, eine synthetische Messanordnung mit einer großen Anzahl von Messsensoren und somit Sender-Empfänger-Geometrien zu errechnen. Die Auswertung, wie sie oben beschrieben worden ist, kann somit ebenfalls mit einer Vielzahl von nacheinander erfassten Impulsechomessungen vorgenommen werden, die beispielsweise mit einem Messsensor ausgeführt werden, der sich mit dem Fahrzeug relativ zu den Objekten durch die Umgebung bewegt. Gierinformationen und Translationsinformationen, die die Bewegung des Fahrzeugs beschreiben, werden in der Regel von anderen Fahrzeugsystemen bereitgestellt oder können über integrierte Sensoren ermittelt werden.

Es soll noch angemerkt werden, dass sowohl eine Transformation der mitbewegten Parameterräume aufeinander als auch der Anpassung der Reflexionsmuster jeweils nur für begrenzte Fahrstrecken möglich ist, da die Transformation oder die Anpassung zu "Verzerrungen" des transformierten Parameterraums führen, was eine Zuordnung der Parametertupel des transformierten Parameterraums zu den Parametertupeln des mit dem ortsfesten Referenzpunkt verknüpften Parameterraums schwierig macht. Ebenso verhält es sich mit der Anpassung der Reflexionsgeometrie. Somit muss der ortsfeste Referenzpunkt nach dem Zurücklegen einer vorgegeben Strecke neu festgelegt werden. Die zuvor im Parameterraum ermittelten Objekte werden dann sinnvollerweise in den Bildraum überführt oder übertragen. Iterativ können die so im Parameterraum ausgewerteten Messergebnisse dann im Bildraum, beispielsweise in einer Umgebungskarte weiter fusioniert werden.

**Patentansprüche**

1.  Verfahren zur Erfassung von Objekten in einer Umgebung eines Fahrzeugs umfassend die Schritte:

Ermitteln mindestens eines Reflexionsmusters ($R^{(G)}_{i,j}(d,\alpha)$, $R^{(K)}_{i,j}(p_1,....,p_n)$) für mindestens eine Objektklasse (G, K), wobei ein Reflexionsmuster für eine Abbildungsgeometrie einer Impuls-Echo-Messung zu jedem Parameterwert-Tupel $((d,\alpha),(p_1,...,p_n))$, welches ein Objekt der Objektklasse (G, K) in der Umgebung charakterisiert, eine erwartete Laufzeit ($T(d,\alpha)$, $T(p_1,...,p_n)$) zuordnet, zu der in einem Echosignal ein Echopuls erwartet wird, wenn nur das entsprechende durch das Parameterwert-Tupel $((d,\alpha),(p_1,...,p_n))$ gekennzeichnete Objekt in der Umgebung vorhanden ist,

Ausführen von Impulsechomessungen für m unterschiedliche Sender-Empfänger-Geometrien und Erfassen von Echosignalen ($e_i(t)$, $0 \le i \le m$) bei diesen Impuls-Echo-Messungen;

Errechnen von Gewichten für die unterschiedlichen durch die Parameterwert-Tupel $((d,\alpha),(p_1,...,p_n))$ charakterisierten Objekte ($g_m$, $k_m$) der entsprechenden Klasse (G, K), indem für jedes Echosignal ($e_i$) anhand des Echosignalwerts ($e_i(t)$) für jenen Zeitpunkt oder der Echosignalwerte ($e_i(t)$) für jene Zeitpunkte, der der erwartete Laufzeit ($T_i(d,\alpha)$, $T_i(p_1,...,p_n)$) entspricht oder die den erwarteten Laufzeiten ($T_i(d,\alpha)$, $T_i(p_1,...,p_n)$) entsprechen, die anhand des dem Echosignal ($e_i(t)$) zugehörigen Reflexionsmusters ($R^{(G)}_i(d,\alpha)$, $R^{(K)}_i(p_1,....,p_n)$) dem Parameterwert-Tupel $((d,\alpha),(p_1,...,p_n))$ zugeordnet ist oder sind, ein oder mehrere Gewichtswerte ($g_i(T_i(d,\alpha))$, $g_i(T_i(p_1,...,p_n))$) ermittelt werden und die so ermittelten Gewichtswerte ($g_i(T_i(d,\alpha))$, $g_i(T_i(p_1,...,p_n))$) zu dem Gewicht ($W^{(G)}(d,\alpha) = \sum_{1 \le m} g_i(\mathbf{T_i}(d,\alpha))$, $W^{(K)}(p_1,...,p_n) = \sum_{1 \le m} g_i(T_i(p_1,...,p_n))$) summiert werden, und anhand der so ermittelten Gewichte ($W^{(G)}(d,\alpha)$, $W^{(K)}((p_1,...,p_n))$) das Vorliegen von Objekten (O) der mindestens einen Objektklasse (G, K) ermittelt wird.

2.  Verfahren nach Anspruch 1, **dadurch gekennzeichnet, dass** die Reflexionsmuster ($R^{(G)}_i$, $R^{(K)}_i$) vor dem Erfassen der Echosignale errechnet wird.

3.  Verfahren nach einen der vorangehenden Ansprüche, **dadurch gekennzeichnet, dass** die Echosignalwerte, anhand derer die Gewichtswerte ermittelt werden, als Gewichtswerte verwendet werden.

4.  Verfahren nach einem der vorangehenden Ansprüche, **dadurch gekennzeichnet, dass** zumindest ein Reflexionsmuster ($R^{(G)}_i$, $R^{(K)}_i$) für eine Sender-Empfänger-Geometrie vorberechnet ist und mindestens ein weiteres Reflexionsmuster aus dem mindestens einen Reflexionsmuster unter Berücksichtigung der Fahrzeugbewegung zwischen den Aufnahmezeitpunkten ($T_i$) der zugehörigen Echosignale ($e_i$) errechnet wird.

5.  Verfahren nach einem der vorangehenden Ansprüche, **dadurch gekennzeichnet, dass** ein Vorhandensein eines Objekts (O) anhand einer Schwellenwertbedingung für die entsprechenden Gewischte (W) der jeweiligen Klasse (K) ermittelt wird.

6.  Verfahren nach einem der vorangehenden Ansprüche, **dadurch gekennzeichnet, dass** eine Ausdehnung eines erkannten Objekts ermittelt wird, indem in den einzelnen Echosignalen geprüft wird, ob der Echosignalwert ($e_i(t)$) oder die Echosignalwerte für jenen Zeitpunkt oder jene Zeitpunkte, der der erwarteten Laufzeit ($T_i(d,\alpha)$, $T_i(p_1,...,p_n)$) entspricht oder die den erwarteten Laufzeiten entsprechen, die anhand des dem Echosignal ($e_i(t)$) zugehörigen Reflexionsmusters ($R^{(G)}_i(d,\alpha)$, $R^{(K)}_i(p_1,....,p_n)$) dem Parameterwert-Tupel $((d,\alpha),(p_1,...,p_n))$ zugeordnet ist oder sind, der das erkannte Objekt charakterisiert, eine vorgegebene Größe überschreitet oder überschreiten oder nicht überschreitet oder nicht überschreiten, und ein unterhalb der vorgegebenen Größe liegender Echosignalwert ein Indiz dafür ist, dass sich das erkannte Objekt nicht bis zu einem Reflexionspunkt erstreckt, an dem in der zugehörigen Senderempfängergeometrie eine Reflexion des Sendepulses an dem erkannten Objekt erfolgt, wenn dieses vollständig gemäß der der Parametrisierung als Parameterwert-Tupel zugrundeliegenden Annahme ausgedehnt ist.

7.  Verfahren nach einem der vorangehenden Ansprüche, **dadurch gekennzeichnet, dass** modifizierte Echosignale ($e_i^{(m)}$) erzeugt werden, indem jeweils die zu erkannten Objekten zugehörigen Signalanteile aus den Echosignalen ($e_i$) entfernt werden.

8.  Verfahren nach einem der vorangehenden Ansprüche, **dadurch gekennzeichnet, dass** die Gewichte ($W^{(G)}$, $W^{(K)}$) anhand der modifizierten Echosignale erneut berechnet werden.

9.  Verfahren nach einem der vorangehenden Ansprüche, **dadurch gekennzeichnet, dass** die Objekte in einer Umgebungskarte eingefügt werden, in der jeder Raumzelle ein Wahrscheinlichkeitswert zugeordnet ist und das Einfügen über eine Wahrscheinlichkeitsansatz nach dem Bayes'schen Theorem erfolgt, wobei den Raumpunkten, die der Kontur des erkannten Objekts entsprechen zuvor eine Existenzwahrscheinlichkeit für das Objekt zugeordnet wird.

10. Vorrichtung zur Erfassung von Objekten in einer Umgebung eines Fahrzeugs umfassend

eine Impulsechomesseinrichtung zum Erfassen von Echosignalen und eine Steuereinrichtung, welche eine Speichereinrichtung zum Abspeichern mindestens eines Reflexionsmusters für eine Sender-Empfänger-Geometrie der Impulsechomesseinrichtung und eine Rechnereinrichtung umfasst, die Echosignale gemäß dem Verfahren eines der Patentansprüche 1 bis 9 auswertet.

## Claims

1. Method for detecting objects in the surroundings of a vehicle, comprising the steps of:

   determining at least one reflection pattern ($R^{(G)}_{i,j}(d,\alpha)$, $R^{(K)}_{i,j}(p_1,...,p_n)$) for at least one object class (G, K), a reflection pattern for an imaging geometry of a pulse echo measurement assigning to each parameter value tuple ($(d,\alpha)$, $(p_1, ... , p_n)$), which characterizes an object of the object class (G, K) in the surroundings, an expected echo time ($\tau(d,\alpha)$, $\tau(p_1, ... , p_n)$) at which an echo pulse is expected in an echo signal when only the corresponding object **characterized by** the parameter value tuple ($(d,\alpha)$, $(p_1,...,p_n)$) is present in the surroundings, executing pulse echo measurements for m different transmitter/receiver geometries, and detecting echo signals ($e_i(t)$, $0 \leq i \leq m$) for said pulse echo measurements; and
   calculating weights for the different objects ($g_m$, $k_m$), **characterized by** the parameter value tuples ($(d,\alpha)$, $(p_1, ... ,p_n)$), of the corresponding class (G, K), in that with the aid of the echo signal value ($e_i(t)$) for that instant, or with the aid of the echo signal values ($e_i(t)$) for those instants, which correspond(s), to the expected echo time ($\tau_i(d,\alpha)$, $\tau_i(p1, ... , p_n)$) or which correspond(s) to the expected echo times ($\tau_i(d,\alpha)$, $\tau_i(p_1, ...,p_n)$) which is or are assigned to the parameter value tuple ($(d,\alpha)$, $(p_1,...,p_n)$) with the aid of the reflection pattern ($R^{(G)}_i(d,\alpha)$, $R^{(K)}_i(p_1, ... , p_n)$) associated with the echo signal ($e_i(t)$), are determined for each echo signal ($e_i$) one or more weight values ($g_i(\tau_i(d,\alpha))$, $g_i(\tau_i(p_1, ... ,p_n))$), and the weight values ($g_i(\tau_i(d,\alpha))$, $g_i(\tau_i(p_1, ..., p_n))$) thus determined are summed to form the weight ($W^{(G)}(d,\alpha) = \sum_{1\leq i\leq m} g_i(\tau_i(d,\alpha))$), $W^{(K)}(p_1, ... , p_n) = \sum_{1\leq i\leq m} g_i(\tau_i(p_1, ... , p_n))$), and the presence of objects (0) of the at least one object class (G, K) is determined with the aid of the weights ($W^{(G)}(d,\alpha)$, $W^{(K)}(p_1, ... , p_n)$) thus determined.

2. Method according to Claim 1, **characterized in that** the reflection patterns ($R^{(G)}_i$, $R^{(K)}_i$) are calculated before the detection of the echo signals.

3. Method according to one of the preceding claims, **characterized in that** the echo signal values with the aid of which the weight values are determined are used as weight values.

4. Method according to one of the preceding claims, **characterized in that** at least one reflection pattern ($R^{(G)}_i$, $R^{(K)}_i$) is precalculated for a transmitter/receiver geometry, and at least one further reflection pattern is calculated from the at least one reflection pattern while taking into account the vehicle movement between the recording instants ($T_i$) of the associated echo signals ($e_i$).

5. Method according to one of the preceding claims, **characterized in that** a presence of an object (0) is determined with the aid of a threshold value condition for the corresponding weights (W) of the respective class (K).

6. Method according to one of the preceding claims, **characterized in that** an extension of a known object is determined by checking in the individual echo signals whether the echo signal value ($e_i(t)$) or the echo signal values for that instant or those instants which corresponds to the expected echo time ($\tau_i(d,\alpha)$, $\tau_i(p_1, ... , p_n)$) or which correspond to the expected echo times which is or are assigned with the aid of the reflection pattern ($R^{(G)}_i(d,\alpha)$, $R^{(K)}_i(p_1, ... , p_n)$) associated with the echo signal ($e_i(t)$), to the parameter value tuple ($(d,\alpha)$, $(p_1, ... ,p_n)$) which characterizes the detected object, exceeds or exceed, or does not exceed or do not exceed a prescribed magnitude, and an echo signal value lying below the prescribed magnitude is an indication that the detected object does not extend as far as a point of reflection at which the transmission pulse is reflected in the associated transmitter/receiver geometry at the detected object when the latter is completely extended in accordance with the assumption on which the parameterization as parameter value tuple is based.

7. Method according to one of the preceding claims, **characterized in that** modified echo signals ($e_i^{(m)}$) are produced by respectively removing from the echo signals ($e_i$) the signal components associated with detected objects.

8. Method according to one of the preceding claims, **characterized in that** the weights ($W^{(G)}$, $W^{(K)}$) are calculated anew with the aid of the modified echo signals.

9. Method according to one of the preceding claims, **characterized in that** the objects are inserted in a map of the surroundings in which each spatial cell is assigned a probability value, and insertion is performed via a probability approach in accordance with Bayes' theorem, the spatial points which correspond to the contour of the detected object being assigned in advance an existence probability for the object.

10. Device for detecting objects in surroundings of a vehicle, comprising a pulse echo measuring device for detecting echo signals and a control device which comprises a memory device for storing at least one reflection pattern for a transmitter/receiver geometry of the pulse echo measuring device and a computing device which evaluates echo signals in accordance with the method of one of Patent Claims 1 to 9.

## Revendications

1. Procédé de détection d'objets présents dans l'environnement d'un véhicule, le procédé comportant les étapes qui consistent à :

   déterminer au moins un motif de réflexion ($R^{(G)}_{i,j}$ (d, α) ,$R^{(K)}_{i,j}$ ($p_1$, ... , $p_n$)) d'au moins une classe d'objets (G, K), un motif de réflexion pour une géométrie d'imagerie d'une mesure d'écho d'impulsion associant à chaque tuple ((d,α),($p_1$, ..., $p_n$)) de valeurs de paramètres qui caractérise un objet de la classe d'objets (G, K) de l'environnement un temps de parcours attendu ($\tau$(d,α), $\tau$($p_1$, ... , $p_n$)) auquel un écho d'impulsion est attendu dans un signal d'écho si seul l'objet **caractérisé par** le tuple ((d,α), ($p_1$, ..., $p_n$)) de valeurs de paramètre est présent dans l'environnement,
   exécuter des mesures d'écho d'impulsion pour m géométries différentes d'émetteur-récepteur et détecter des signaux d'écho ($e_i$(t), $0 \leq i \leq m$) pour ces mesures d'écho d'impulsion,
   calculer la pondération des différents objets ($g_m$, $k_m$) **caractérisés par** les tuples ((d,α) ($p_1$, ... , $p_n$)) de valeurs de paramètre de la classe (G, K) correspondante en déterminant une ou plusieurs valeurs de pondération ($g_i$($\tau_i$(d,α)),$g_i$($\tau_i$($p_1$, ..., $p_n$)) pour chaque signal d'écho ($e_i$) à l'aide de la valeur ($e_i$(t)) du signal d'écho à chaque instant ou des valeurs ($e_i$(t)) du signal d'écho à chaque instant qui correspondent au temps de parcours ($\tau_i$(d,α), $\tau_i$($p_1$, ... , $p_n$)) attendu ou aux temps de parcours ($\tau_i$(d,α), $\tau_i$($p_1$, ..., $p_n$)) attendus et qui est associée ou sont associées à l'aide du motif de réflexion ($R^{(G)}$ (d,α), $R^{(K)}_i$($p_1$, ... , $p_n$)) associé au signal d'écho ($e_i$(t)) au tuple ((d,α),($p_1$, ... , $p_n$)) de valeurs de paramètre, et en additionnant les valeurs de pondération ($g_i$ ($\tau_i$ (d, α)), $g_i$ ($\tau_i$ ($p_1$, ... , $p_n$)) ainsi déterminées pour former le poids ($W^{(G)}$ (d, α) $=\sum_{1 \leq i \leq m} g_i$ ($\tau i$ (d,α)), $W^{(K)}$ ($p_1$, ... , $p_n$) $=\sum_{1 \leq i \leq m} g_i$($\tau_i$ ($p_1$, ..., $p_n$)), et déterminer à partir des poids ($W^{(G)}$ (d, α), $W^{(K)}$(($p_1$, ... , $p_n$)) ainsi déterminés la présence d'objets (0) de la ou des classes d'objets (G, K).

2. Procédé selon la revendication 1, **caractérisé en ce que** les motifs de réflexion ($R^{(G)}_i$, $R^{(K)}_i$) sont calculés avant la détection des signaux d'écho.

3. Procédé selon l'une des revendications précédentes, **caractérisé en ce que** les valeurs de signal d'écho à l'aide desquelles les valeurs de pondération sont déterminées sont utilisées comme valeurs de pondération.

4. Procédé selon l'une des revendications précédentes, **caractérisé en ce qu'**au moins un motif de réflexion ($R^{(G)}_i$, $R^{(K)}_i$) est calculé au préalable pour une géométrie d'émetteur-récepteur et au moins un autre motif de réflexion est calculé à partir du ou des motifs de réflexion en tenant compte du déplacement du véhicule entre les instants d'enregistrement ($T_i$) des signaux d'écho ($e_i$) associés.

5. Procédé selon l'une des revendications précédentes, **caractérisé en ce que** la présence d'un objet (0) est déterminée à l'aide d'une condition de valeurs de seuil des pondérations correspondantes (W) de chaque classe (K).

6. Procédé selon l'une des revendications précédentes, **caractérisé en ce que** l'extension d'un objet reconnu est déterminée en vérifiant dans les différents signaux d'écho si la valeur ($e_i$(t)) du signal d'écho ou les valeurs de signal d'écho, pour chaque instant ou tous les instants qui correspondent au temps de parcours ($\tau_i$ (d, α), $\tau_i$ ($p_1$, ... , $p_n$) attendu ou au temps de parcours attendus qui sont associés à l'aide du motif de réflexion ($R^{(G)}_i$(d, α), $R^{(K)}_i$($p_1$, ... , $p_n$)), associé au signal d'écho ($e_i$(t)), au tuple ((d,α),($p_1$, ..., $p_n$)) de valeurs de paramètre qui caractérise l'objet reconnu dépassent une grandeur prédéterminée ou ne la dépassent pas, et une valeur de signal d'écho située en dessous de la grandeur prédéterminée étant un indice que l'objet détecté ne s'étend pas jusqu'à un point de réflexion auquel, dans la géométrie émetteur-récepteur associée, une réflexion de l'impulsion d'émission sur l'objet détecté a lieu lorsque ce dernier s'étend entièrement selon l'hypothèse à la base de la paramétrisation, comme tuple de valeurs de paramètre.

**7.** Procédé selon l'une des revendications précédentes, **caractérisé en ce que** des signaux modifiés d'écho ($e_i^{(m)}$) sont formés en retirant des signaux d'écho ($e_i$) les parties de signal qui appartiennent aux objets détectés.

**8.** Procédé selon l'une des revendications précédentes, **caractérisé en ce que** les pondérations ($W^{(G)}$, $W^{(K)}$) sont de nouveaux calculées à l'aide de signaux d'écho modifiés.

**9.** Procédé selon l'une des revendications précédentes, **caractérisé en ce que** les objets sont insérés dans une carte d'environnement dans laquelle une valeur de probabilité est associée à chaque cellule de l'espace ou **en ce que** l'insertion s'effectue par l'intermédiaire d'une stratégie de probabilité selon le théorème de Bayes, une probabilité d'existence de l'objet étant associée préalablement aux points de l'espace qui correspondent au contour de l'objet détecté.

**10.** Ensemble de détection d'objets dans l'environnement d'un véhicule, comprenant un dispositif de mesure d'écho d'impulsion, qui détecte des signaux d'écho et un dispositif de commande qui comporte un dispositif de mémoire qui conserve en mémoire au moins un motif de réflexion d'une géométrie émetteur-récepteur du dispositif de mesure d'écho d'impulsion et un dispositif de calcul qui évalue les signaux d'écho à l'aide du procédé selon l'une des revendications 1 à 9.

FIG. 1

FIG. 2

FIG. 3a

FIG. 3b

FIG. 3c

FIG. 3d

FIG. 4a

FIG. 4f

FIG. 4b

FIG. 4g

FIG. 4c

FIG. 4h

FIG. 4d

FIG. 4i

FIG. 4e

FIG. 4j

FIG. 5

Translation    ΔX = 20cm, ΔY = 20cm,

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1557694 A1
- WO 2010121582 A1
- US 20100097200 A1
- DE 102008041679 A1
- DE 10335601 A1